# EUROPEAN PATENT APPLICATION

(11) **EP 3 249 589 A1**
(43) Date of publication of application: **29.11.2017**
(21) Application number: 17169725.3
(22) Date of filing: 05.05.2017
(51) Int. Cl.: G06Q 10/06

(54) **INDUSTRIAL AUTOMATION ASSET MODELING AND SYNCHRONIZATION**

(30) Priority: 24.05.2016 US 201615163609
(71) Applicant: Rockwell Automation Technologies, Inc., Mayfield Heights, OH 44124 (US)
(72) Inventor: VENNE, Bruce K., Oak Creek, WI Wisconsin 53154 (US); ENTZMINGER, Rob A., Shawnee, KS Kansas 66216 (US); FLICKINGER, Peter J., Oak Creek, KS Kansas 53154 (US); MAZUR, David C., Mequon, WI Wisconsin 53092 (US); SCHMELEBECK, Jeffrey, Oak Creek, WI Wisconsin 53254 (US); DAY, Scott D., Richfield, WI Wisconsin 53076 (US)
(74) Representative: Grünecker Patent- und Rechtsanwälte PartG mbB

(57) **Abstract**

Provided herein are systems, methods, and software to facilitate automatic generation of type-based reporting model and reports associated with an industrial automation environment. In one implementation, one or more computer-readable storage media have program instructions stored thereon, wherein the program instructions, when executed by a computing system, direct the computing system to at least access a source of data containing information related to operation of a system and identify at least one object in the information related to a data property. The program instructions also direct the computing system to create an asset definition of the at least one object, instantiate a model of the at least one object in an asset model based on the asset definition, and generate a report comprising an aspect of the model based on the data property.

## Description

### TECHNICAL FIELD

Aspects of the disclosure are related to computing hardware and software technology, and in particular to industrial automation applications.

### TECHNICAL BACKGROUND

Industrial controllers and their associated I/O devices are central to the operation of modem automation systems. These controllers interact with field devices on the plant floor to control automated processes relating to such objectives as product manufacture, material handling, batch processing, supervisory control, and other such applications. Industrial controllers store and execute user-defined control programs to effect decision-making in connection with the controlled process. Such programs can include, but are not limited to, ladder logic, sequential function charts, function block diagrams, structured text, or other such programming structures.

Because of the large number of system variables that must be monitored and controlled in near real-time, industrial automation systems often generate vast amounts of near real-time data. In addition to production statistics, data relating to machine health, alarm statuses, operator feedback (e.g., manually entered reason codes associated with a downtime condition), electrical or mechanical load over time, and the like are often monitored, and in some cases recorded, on a continuous basis. This data is generated by the many industrial devices that can make up a given automation system, including the industrial controller and its associated I/O, telemetry devices for near real-time metering, motion control devices (e.g., drives for controlling the motors that make up a motion system), visualization applications, lot traceability systems (e.g., barcode tracking), etc. Moreover, since many industrial facilities operate on a 24-hour basis, their associated automation systems can generate a vast amount of potentially useful data at high rates. For an enterprise with multiple plant facilities, the amount of generated automation data further increases

The large quantity of data generated by modem automation systems makes it possible to apply a broad range of plant analytics to the automation systems and processes that make up an industrial enterprise or business. Reports, charts, and other human-readable formats are often available or may be created for plant personnel and others wishing to monitor and review the generated data in either a real-time mode or at a later time after the data has been stored.

A report that has been created to display the data of a given industrial automation system may find it difficult to find and display similar data of another industrial automation system. Objects and other components of the other system may be similar or even identical to the first system, but due to even slight variations in component names, for example, during the system set up stage, a disconnect can exist between the data stored in the system and a pre-generated report designed to look for specifically-named objects in the system. Thus, reports previously created may not display all the data they were designed to show.

Creating new reports or even fixing pre-generated reports to show the data generated by a particular system can be a laborious and tedious manual process. This process can require setting up individual connections between data points of the system and the parameter value to be reported for hundreds of parameters or more.

The above-described deficiencies of today's industrial control and business systems are merely intended to provide an overview of some of the problems of conventional systems, and are not intended to be exhaustive. Other problems with conventional systems and corresponding benefits of the various non-limiting embodiments described herein may become further apparent upon review of the following description.

### OVERVIEW

Provided herein are systems, methods, and software to facilitate automatic generation of type-based reporting model and reports associated with an industrial automation environment. In one implementation, one or more computer-readable storage media have program instructions stored thereon, wherein the program instructions, when executed by a computing system, direct the computing system to at least access a source of data containing information related to operation of a system and identify at least one object in the information related to a data property. The program instructions also direct the computing system to create an asset definition of the at least one object, instantiate a model of the at least one object in an asset model based on the asset definition, and generate a report comprising an aspect of the model based on the data property.

In another implementation, a method to automatically generate reports in an industrial automation environment includes accessing a source of data containing information related to operation of a system and identifying at least one object in the information related to a data property. The method also includes creating an asset definition of the at least one object, instantiating a model of the at least one object in an asset model based on the asset definition, and generating a report comprising an aspect of the model based on the data property.

In another implementation, a system to automatically generate reports in an industrial automation environment includes a machine system, an industrial controller configured to control machine system, and a database system configured to store operational data of the machine system. A computing system is also included and programmed to access a source of data containing information related to operation of a system, identify at least one object in the information related to a data property, and create an asset definition of the at least one object. The computing system is further programmed to instantiate a model of the at least one object in an asset model based on the asset definition and generate a report comprising an aspect of the model based on the data property.

This Overview is provided to introduce a selection of concepts in a simplified form that are further described below in the Technical Disclosure. It should be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure can be better understood with reference to the following drawings. While several implementations are described in connection with these drawings, the disclosure is not limited to the implementations disclosed herein. On the contrary, the intent is to cover all alternatives, modifications, and equivalents.
Figure 1 illustrates flow diagram that illustrates an operation for building type-based reporting models and reports based on the type-based reporting models in an exemplary implementation.
Figure 2 illustrates a report incorporating a visual model in an exemplary implementation.
Figure 3 is a block diagram that illustrates an industrial automation environment in an exemplary implementation.

### TECHNICAL DISCLOSURE

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by the claims and their equivalents.

Implementations described herein provide for the generation of model objects from control structures found within the control logic for an industrial automation system controller and for the automatic creation of reports based on the generated model objects. The model objects are created from correlations between the control structures and user-defined UDTs set up to map the control structures to modelling object equivalents more familiar to a user. The implementations allow for automatic mapping of attributes, tags, or properties, for the corresponding wire-up of the tags to visual modelling objects and for the automatic creation of reports presented to the user for the visualization of the data generated in the industrial automation system.

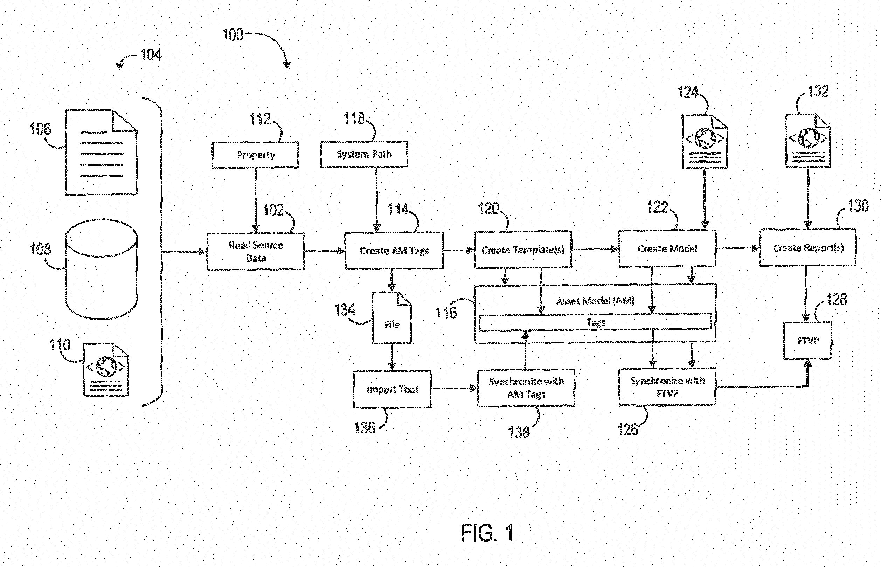

Figure 1 illustrates a flow diagram that illustrates an operation 100 for building type-based reporting models and reports based on the type-based reporting models in an exemplary implementation. Operation 100 begins with the reading of source data at block 102. The source data is read or queried from one or more objects 104 containing information regarding the user-defined types (UDTs) available to the industrial automation system for implementing the source data to instantiate the industrial automation system.

Objects 104, in an implementation, may include a computer-readable electronic file 106 containing information or instructions that, when implemented by a system controller, instruct the system controller to carry out the designed system program. Objects 104 also may include a configured solution 108, a database configuration that includes information describing the configuration of the system. For example, configured solution 108 may include configuration information for a networked Motor Control Center, a Packaged Power Lineup with Intelligent Electronic Devices (IEDs), a Switchgcar Lineup with IEDs, a Supervisory Control and Data Acquisition System, a Distributed Control System, Engineered Industrial Networks/Systems, an Order Management System / Enterprise Resource Planning System, and the like. Additionally, objects 104 may include a product definition file 110 in, for example, an Extensible Markup Language (XML) format.

Based on a target property 112 already contained in or optionally input into block 102, the source data is interrogated to find the UDTs containing the target property 112. For example, the target property 112 to search for may be a property named "InfoID" that is configured to hold a string value or a number value. However, properties having other names or value types are also contemplated herein. In this example, object 104 is interrogated to find all of the UDTs contained therein having the InfoID property. Operation 100 may gather all such UDTs found into a collection or may alternatively gather only those UDTs found to have the InfoID property matching a particular value. For example, operation 100 may be configured to gather only those UDTs whose InfoID properties fall within a certain range of numbers or match the given string pattern.

After the UDTs have been found and/or stored at block 102, operation 100 creates asset model (AM) tags at block 114. An asset model or historian repository 116, such as a FactoryTalk® Historian provided by Rockwell Automation, Inc., establishes a reliable foundation for capturing the data in the industrial automation system. While the interrogation of the object 104 in block 102 allows acquisition of the UDTs defined in the object 104, the location path of the UDTs in an implemented or instantiated system using the object 104 is typically not retrievable using the object 104 alone. Instead, the system path 118 to the location of the controller implementing the object 104 is provided as an input to block 114. Based on this input, AM tags that point to the UDTs in the controller are created.

At block 120, templates are created based on the UDTs found in block 102 that create raw asset definitions or class objects that define what the object is. That is, the UDTs in the object 104 serve as the basis to create the templates. All of the properties or tags of a particular UDT are grouped and assigned to create a class object or template. For example, the properties of a UDT that define an air circuit breaker are assigned to an air circuit breaker template.

Operation 100 creates or instantiates models at block 122 of the instantiations of the UDTs in the controller based on the corresponding class objects or templates. For example, in an industrial automation system incorporating a plurality of air circuit breakers and a plurality of feeder relays, a separate model is created in this step for each of the air circuit breakers and for each of the feeder relays in the system. In one implementation, a product definitions file 124 may be used as a template to organize how the models are created. The templates and models created in blocks 120 and 122 provide a basis for the data stored in AM 116 so that the data available in the industrial automation system can be captured.

In addition to capturing and storing system data in AM 116, reporting of the system data can provide important insight into performance parameters of the system. Once the model is created in AM 116, it can be synchronized for viewing at block 126 with an information management and decision support system 128 such as FactoryTalk® VantagePoint (FTVP) provided by Rockwell Automation, Inc. The templates 120 created in AM 116 are available as types inside FTVP 128 that can be reported on.

Reports that visually display the system data and performance to end users form an integral part of system monitoring. At block 130, one or more report based on the models created in block 122 are created to present the system performance and data to end users. These reports are created based on the property 112 tag of each of the models 122. Different property tag values can be reported on differently. In a preferred implementation, the reports created are available to FTVP 128. A report definitions file 132 may be used as a template to organize how the reports are set up and created. Alternatively, the reports may be pre-programmed into block 130. The information management and decision support system 128 allows information of the instantiated UDTs in the system controller to be shown visually in either real time or as data captured and stored in previous time points. The reports may include trend reports, composite reports, and grid-type report as examples. However, other types of reports are also contemplated herein. The AM object representations and associated tags, together with their analysis via the product definitions file 124, are thus synchronized with the FTVP 128 where the report definitions 132 based on the InfoID property 112 are applied.

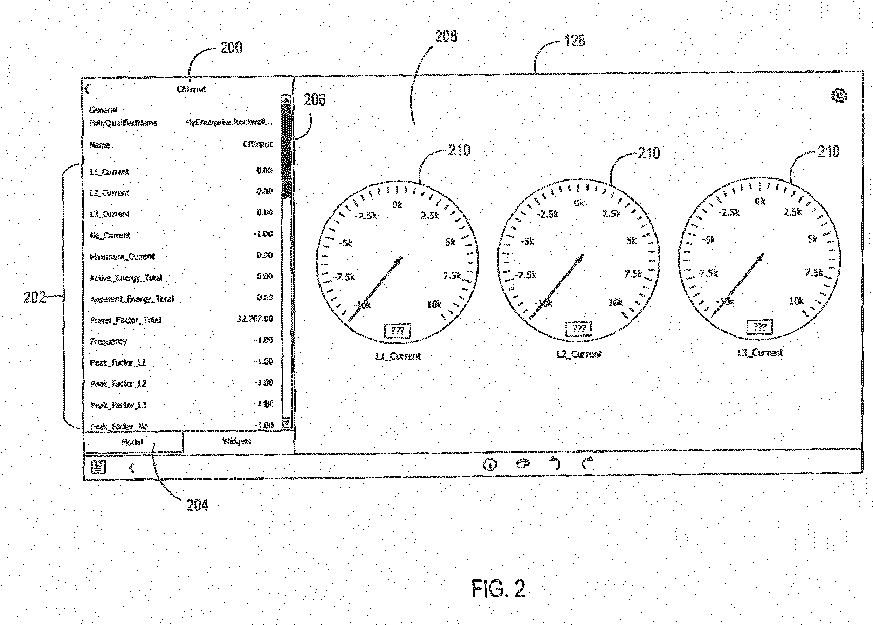

An example of a report is illustrated in Figure 2, which shows an implementation of FTVP 128 on a visual display device such as a workstation monitor or mobile device graphical user interface (GUI). A CBInput model object 200 created in block 122 of operation 100 is shown in FTVP 128. Model template tags 202 are shown in a model viewing pane 204 of FTVP 128. A portion of model template tags 202 for CBInput model object 200 are illustrated as evidenced by the vertical scrollbar 206 in pane 204. Three current tags (LI_Current, L2_Current, and L3_Current) are instantiated in a reporting pane 208 of FTVP 128. Thus, models of these three current tags are visible, in this example of a created report, as real-time gauges 210 of the data for these tags stored in AM 116.

Based in the InfoID property 112 key, the report shown in reporting pane 208 may be created as one of the reports automatically generated for the CBInput model object 200 according to the embodiments described herein.

Referring back to Figure 1, an advanced user may influence or modify the AM tags created in block 114. For example, the user may tune the AM tags if desired based on previous experience. To accomplish this, operation 100 creates a file 134 such as a CSV file. The file 134 exposes tag properties as well as the other meta-data definition about the tag such as, for example, the units, the description, how often to collect data, etc. Using an import tool 136, the user can modify the information in the file 134. For example, the user may elect to modify how often the data is collected (for current, voltage, or temperature, etc.) for a particular instrument (air circuit breaker) because the value is desired to be longer or shorter than a default value is for this setting (e.g., change the collection duration value to be every 1 second rather than 0.1 second). These modifications arc synchronized at block 138 with the tags of the asset model 116.

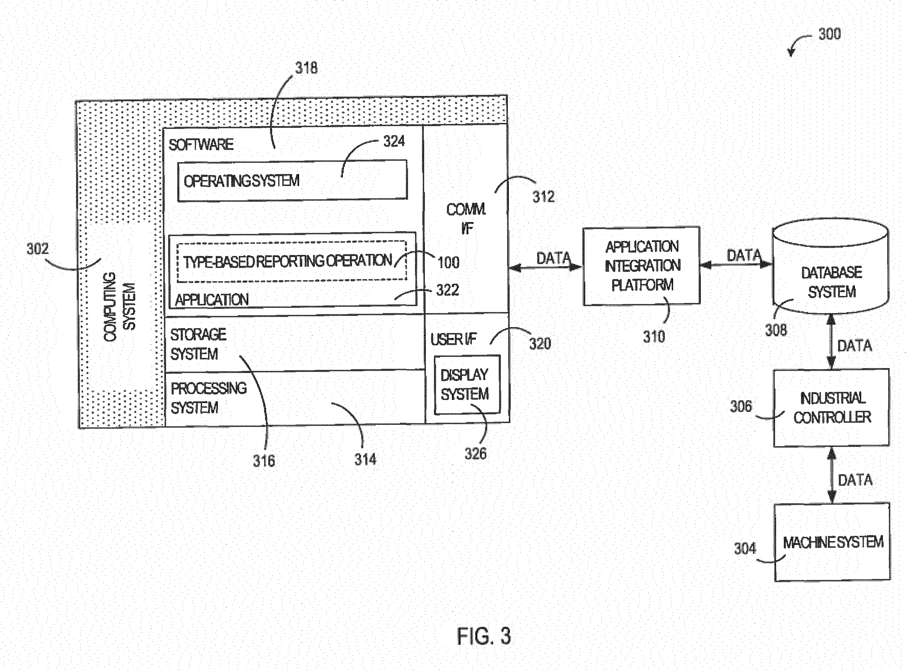

Turning now to Figure 3, a block diagram that illustrates an industrial automation environment 300 in an exemplary implementation is shown. Industrial automation environment 300 provides an example of an industrial automation environment that may be utilized to implement the operation 100 disclosed herein, but other environments could also be used. Industrial automation environment 300 includes computing system 302, machine system 304, industrial controller 306, database system 308, and application integration platform 310. Machine system 304 and controller 306 are in communication over a communication link, controller 306 and database system 308 communicate over a communication link, database system 308 and application integration platform 310 communicate over a communication link, and application integration platform 310 and computing system 302 are in communication over a communication link. Note that there would typically be many more machine systems in most industrial automation environments, but the number of machine systems shown in Figure 3 have been restricted for clarity.

Industrial automation environment 300 comprises an automobile manufacturing factory, food processing plant, oil drilling operation, microprocessor fabrication facility, or some other type of industrial enterprise. Machine system 304 could comprise a sensor, drive, pump, filter, drill, motor, robot, fabrication machinery, mill, printer, or any other industrial automation equipment, including their associated control systems. A control system comprises, for example, industrial controller 306, which could include automation controllers, programmable logic controllers (PLCs), programmable automation controllers (PACs), or any other controllers used in automation control of machine system 304. Additionally, machine system 304 could comprise other industrial equipment, such as a brew kettle in a brewery, a reserve of coal or other resources, or any other element that may reside in an industrial automation environment 300.

Machine system 304 continually produces operational data over time. The operational data indicates the current status of machine system 304, such as parameters, pressure, temperature, speed, energy usage, overall equipment effectiveness (OEE), mean time between failure (MTBF), mean time to repair (MTTR), voltage, throughput volumes, times, tank levels, or any other performance status metrics. The operational data may comprise dynamic charts or trends, real-time video, or some other graphical content. Machine system 304 and/or controller 306 is capable of transferring the operational data over a communication link to database system 308, application integration platform 310, and computing system 302, typically via a communication network. Database system 308 could comprise a disk, tape, integrated circuit, server, or some other memory device. Database system 308 may reside in a single device or may be distributed among multiple memory devices.

Application integration platform 310 comprises a processing system and a communication transceiver. Application integration platform 310 may also include other components such as a router, server, data storage system, and power supply. Application integration platform 310 provides an example of application server 130, although server 130 could use alterative configurations. Application integration platform 310 may reside in a single device or may be distributed across multiple devices. Application integration platform 310 may be a discrete system or may be integrated within other systems- including other systems within industrial automation environment 300. In some examples, application integration platform 310 could comprise a FactoryTalk® VantagePoint server system provided by Rockwell Automation, Inc.

The communication links over which data is exchanged between machine system 304, industrial controller 306, database system 308, application integration platform 310, and communication interface 312 of computing system 302 could use metal, air, space, optical fiber such as glass or plastic, or some other material as the transport medium - including combinations thereof. The communication links could comprise multiple network elements such as routers, gateways, telecommunication switches, servers, processing systems, or other communication equipment and systems for providing communication and data services. These communication links could use various communication protocols, such as TDM, IP, Ethernet, telephony, optical networking, packet networks, wireless mesh networks (WMN), local area networks (LAN), metropolitan area networks (MAN), wide area networks (WAN), hybrid fiber coax (HFC), communication signaling, wireless protocols, communication signaling, peer-to-peer networking over Bluetooth, Bluetooth low energy, Wi-Fi Direct, near field communication (NFC), or some other communication format, including combinations thereof. The communication links could be direct links or may include intermediate networks, systems, or devices.

Computing system 302 may be representative of any computing apparatus, system, or systems on which the event data saving processes disclosed herein or variations thereof may be suitably implemented. Computing system 302 provides an example of a computing system that could be used as either a server or a client device in some implementations, although such devices could have alternative configurations. Examples of computing system 302 include mobile computing devices, such as cell phones, tablet computers, laptop computers, notebook computers, and gaming devices, as well as any other type of mobile computing devices and any combination or variation thereof. Examples of computing system 302 also include desktop computers, server computers, and virtual machines, as well as any other type of computing system, variation, or combination thereof. In some implementations, computing system 302 could comprise a mobile device capable of operating in a server-like fashion which, among other uses, could be utilized in a wireless mesh network.

Computing system 302 includes processing system 314, storage system 316, software 318, communication interface 312, and user interface 320. Processing system 314 is operatively coupled with storage system 316, communication interface 312, and user interface 320. Processing system 314 loads and executes software 318 from storage system 316. Software 318 includes application 322 and operating system 324. Application 322 may include operation 100 in some examples. When executed by computing system 302 in general, and processing system 314 in particular, software 318 directs computing system 302 to operate as described herein for operation 100 or variations thereof. In this example, user interface 320 includes display system 326, which itself may be part of a touch screen that also accepts user inputs via touches on its surface. Computing system 302 may optionally include additional devices, features, or functionality not discussed here for purposes of brevity.

Implementations of the embodiments described herein provide benefits such as, for example, shortened system design times and can allow casier access to visualized data for improved decision making and reporting.

The functional block diagrams, operational sequences, and flow diagrams provided in the Figures are representative of exemplary architectures, environments, and methodologies for performing novel aspects of the disclosure. While, for purposes of simplicity of explanation, the methodologies included herein may be in the form of a functional diagram, operational sequence, or flow diagram, and may be described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology may be required for a novel implementation.

The included descriptions and figures depict specific implementations to teach those skilled in the art how to make and use the best mode. For the purpose of teaching inventive principles, some conventional aspects have been simplified or omitted. Those skilled in the art will appreciate variations from these implementations that fall within the scope of the invention. Those skilled in the art will also appreciate that the features described above can be combined in various ways to form multiple implementations. As a result, the invention is not limited to the specific implementations described above, but only by the claims and their equivalents.
The following is a **list** of further preferred embodiments of the invention:
Embodiment 1. One or more computer-readable storage media having program instructions stored thereon, wherein the program instructions, when executed by a computing system, direct the computing system to at least:
   access a source of data containing information related to operation of a system;
   identify at least one object in the information related to a data property;
   create an asset definition of the at least one object;
   instantiate a model of the at least one object in an asset model based on the asset definition; and
   generate a report comprising an aspect of the model based on the data property.
Embodiment 2. The one or more computer-readable storage media of embodiment 1 wherein the program instructions further direct the computing system to create the plurality of asset model tags of the at least one object based on a location of a system controller in the system.
Embodiment 3. The one or more computer-readable storage media of embodiment 2 wherein the program instructions further direct the computing system to synchronize user-modified tag properties with corresponding asset model tags prior to the instantiation of the model.
Embodiment 4. The one or more computer-readable storage media of embodiment 3 wherein the program instructions further direct the computing system to expose the tag properties to allow user modification thereof.
Embodiment 5. The one or more computer-readable storage media of embodiment 1 wherein the program instructions that direct the computing system to generate the report further direct the computing system to generate the report for viewing with an information management and decision support system.
Embodiment 6. The one or more computer-readable storage media of embodiment 1 wherein the at least one object comprises a user-defined type (UDT).
Embodiment 7. The one or more computer-readable storage media of embodiment 1 wherein the source of data containing information related to operation of the system comprises a computer-readable electronic file comprising instructions that, when implemented by a controller of the system, instruct the controller to carry out the operation of the system.
Embodiment 8. A method to automatically generate reports in an industrial automation environment, the method comprising:
   accessing a source of data containing information related to operation of a system;
   identifying at least one object in the information related to a data property;
   creating an asset definition of the at least one object;
   instantiating a model of the at least one object in an asset model based on the asset definition; and
   generating a report comprising an aspect of the model based on the data property.
Embodiment 9. The method of embodiment 8 further comprising creating the plurality of asset model tags of the at least one object based on a location of a system controller in the system.
Embodiment 10. The method of embodiment 9 further comprising synchronizing user-modified tag properties with corresponding asset model tags prior to the instantiation of the model.
Embodiment 11. The method of embodiment 10 further comprising exposing the tag properties to allow user modification thereof.
Embodiment 12. The method of embodiment 8 generating the report comprises generating the report for viewing with an information management and decision support system.
Embodiment 13. The method of embodiment 8 wherein the at least one object comprises a user-defined type (UDT).
Embodiment 14. The method of embodiment 8 wherein the source of data containing information related to operation of the system comprises a computer-readable electronic file comprising instructions that, when implemented by a controller of the system, instruct the controller to carry out the operation of the system.
Embodiment 15. A system to automatically generate reports in an industrial automation environment, the system comprising:
   a machine system;
   an industrial controller configured to control machine system;
   a database system configured to store operational data of the machine system; and
   a computing system programmed to:
      access a source of data containing information related to operation of a system;
      identify at least one object in the information related to a data property;
      create an asset definition of the at least one object;
      instantiate a model of the at least one object in an asset model based on the asset definition; and
      generate a report comprising an aspect of the model based on the data property.
Embodiment 16. The computing system of embodiment 15 wherein the computing system is further programmed to create the plurality of asset model tags of the at least one object based on a location of a system controller in the system.
Embodiment 17. The computing system of embodiment 16 wherein the computing system is further programmed to synchronize user-modified tag properties with corresponding asset model tags prior to the instantiation of the model.
Embodiment 18. The computing system of embodiment 17 wherein the computing system is further programmed to expose the tag properties to allow user modification thereof.
Embodiment 19. The computing system of embodiment 15 wherein the computing system, in being programmed to generate the report, is further programmed to generate the report for viewing with an information management and decision support system.
Embodiment 20. The computing system of embodiment 15 wherein the at least one object comprises a user-defined type (UDT).

## Claims

1. A method to automatically generate reports in an industrial automation environment, the method comprising:
accessing a source of data containing information related to operation of a system;
identifying at least one object in the information related to a data property;
creating an asset definition of the at least one object;
instantiating a model of the at least one object in an asset model based on the asset definition; and
generating a report comprising an aspect of the model based on the data property.

2. The method of claim 1 further comprising creating the plurality of asset model tags of the at least one object based on a location of a system controller in the system.

3. The method of claim 2 further comprising synchronizing user-modified tag properties with corresponding asset model tags prior to the instantiation of the model.

4. The method of claim 3 further comprising exposing the tag properties to allow user modification thereof.

5. The method of one of claims 1 to 4 generating the report comprises generating the report for viewing with an information management and decision support system.

6. The method of one of claims 1 to 5 wherein the at least one object comprises a user-defined type (UDT).

7. The method of one of claims 1 to 6 wherein the source of data containing information related to operation of the system comprises a computer-readable electronic file comprising instructions that, when implemented by a controller of the system, instruct the controller to carry out the operation of the system.

8. A system to automatically generate reports in an industrial automation environment, the system comprising:
a machine system;
an industrial controller configured to control machine system;
a database system configured to store operational data of the machine system; and
a computing system programmed to:
access a source of data containing information related to operation of a system;
identify at least one object in the information related to a data property;
create an asset definition of the at least one object;
instantiate a model of the at least one object in an asset model based on the asset definition; and
generate a report comprising an aspect of the model based on the data property.

9. The computing system of claim 8 wherein the computing system is further programmed to perform a method according to one of claims 1 to 7.

10. One or more computer-readable storage media having program instructions stored thereon, wherein the program instructions, when executed by a computing system, direct the computing system to at least:
access a source of data containing information related to operation of a system;
identify at least one object in the information related to a data property;
create an asset definition of the at least one object;
instantiate a model of the at least one object in an asset model based on the asset definition; and
generate a report comprising an aspect of the model based on the data property.

11. The one or more computer-readable storage media of claim 10 wherein the program instructions further direct the computing system to perform a method according to one of claims 1 to 7.
